# EUROPÄISCHE PATENTANMELDUNG

(11) **EP 1 143 025 A1**
(43) Veröffentlichungstag der Anmeldung: **10.10.2001**
(21) Anmeldenummer: 01101444.6
(22) Anmeldetag: 23.01.2001
(51) Int. Cl.: C22C 38/22, C22C 38/24, C22C 38/06, C23C 8/26, C23C 8/36, F16J 9/26

(54) **Stahlkolbenring sowie Verfahren zu seiner Herstellung**

(30) Priorität: 15.03.2000 DE 10012619
(71) Anmelder: Federal-Mogul Burscheid GmbH, 51399 Burscheid (DE)
(72) Erfinder: Grunow, Frank, Dr., 51399 Burscheid (DE)
(74) Vertreter: Becker Kurig Straus

(57) **Zusammenfassung**

Ein Werkstoff, inbesonders ein weichgeglühter Werkstoff, wird offenbart. Ferner wird ein Verfahren zur Herstellung und ein Stahlkolbenring, der aus diesem weichgeglühten Werkstoff hergestellt wird, offenbart. Der Werkstoff weist folgende chemische Zusammensetzung auf, wobei die Anteilsbereiche der Elemente in Gew.-% angegeben sind und der Rest Eisen ist: 0,25 bis 0,65% C, bis 2% Si, bis 2% Mn, bis 0,030% P, bis 0,030% S, 1,0 bis 8,0% Cr, bis 1,5% Mo, bis 1,5% Al, bis 0,35% V, bis 0,30% Ti und bis 0,35% Nb. Das Verfahren zur Herstellung eines Stahlkolbenrings aus diesem Werkstoff umfasst die Schritte:
(a) Bereitstellen eines gewickelten und weichgeglühten Drahtes als Ausgangswerkstoff,
(b) Formen des Stahlkolbenrings unter Abtrennung vom gewickelten Draht,
(c) Glühen des Stahlkolbenrings auf einem Dorn und gleichzeitiges Nitrieren des Stahlkolbenrings in einem stickstoffabgebenden Medium,
(d) Fertigbearbeiten des Stahlkolbenrings.

Ein aus dem Werkstoff und mit dem Verfahren hergestellter Stahlkolbenring weist eine oberflächenbehandelte Schicht mit einer Härte von mindestens 700 HV 0,1 auf.

## Beschreibung

Die vorliegende Erfindung betrifft einen Werkstoff, insbesonders einen weichgeglühten Werkstoff, gemäß Oberbegriff des Anspruchs 1, einen Stahlkolbenring und ein Verfahren zu dessen Herstellung. Insbesondere betrifft die Erfindung einen Stahlkolbenring zur Verwendung in Verbrennungsmotoren und ein Verfahren zur Herstellung dieses Stahlkolbenrings. Ein gattungsgemäßer Stahlkolbenringwerkstoff ist beispielsweise aus der DE 3431244 A1 bekannt.

In modernen Verbrennungsmotoren werden hohe Anforderungen an die Belastbarkeit der Bauteile, beispielsweise eines Stahlkolbenrings in einem Zylinder, gestellt. Üblicherweise werden Kolbenringe zur Verwendung in Verbrennungsmotoren aus Gusseisen hergestellt. Diese Kolbenringe aus Gusseisen weisen jedoch einige Nachteile auf. Aus der genannten DE 3431244 A1 sind die Nachteile dieser gusseisernen Kolbenringe bekannt und es werden Kolbenringe aus anderen Materialien, beispielsweise Si-Cr-Stahl, 13Cr-Stahl oder Martensit-Edelstahl, als Alternativen zum Gusseisen genannt. Jedoch sind Kolbenringe aus diesen alternativen Ausgangsstoffen teuer. Da der Werkstoff Stahl teuer ist und das Verfahren zur Herstellung der Kolbenringe aus diesem Werkstoff aufwendig ist, sind Stahlkolbenringe unwirtschaftlich. Aus dem Stand der Technik sind verschiedene Verfahren zur Steigerung der Verschleißfestigkeit von Gussstücken bekannt. Beispielsweise können als Verschleißschutzschichten galvanisch abgeschiedene Hartchromschichten und flammgespritzte Molybdänschichten verwendet werden. Diese Verfahren sind jedoch auch aufwendig und kostenintensiv.

Aufgabe der vorliegenden Erfindung ist es, einen Werkstoff für Stahlkolbenringe zu liefern, der aufgrund der chemischen Zusammensetzung und des Gefügezustandes preiswert ist. Ebenso ist es eine Aufgabe der vorliegenden Erfindung, ein Verfahren zu liefern, in dem die Herstellungsschritte des Kolbenringes aufeinander abgestimmt und unter Kostengesichtspunkten optimiert sind.

Die Aufgabe wird erfindungsgemäß durch einen Werkstoff nach Anspruch 1 zur Herstellung eines Stahlkolbenrings gelöst. Ferner ist ein Verfahren zur Herstellung eines Stahlkolbenrings aus dem genannten Werkstoff nach Anspruch 6 und ein derart hergestellter Stahlkolbenring nach Anspruch 11 angegeben.

Ein Stahlkolbenring nach der vorliegenden Erfindung besteht aus einer Legierung, deren Zusammensetzung sich von den verwendeten Materialien im Stand der Technik unterscheidet. Die einzelnen Anteilsbereiche der Elemente in der erfindungsgemäßen Legierung haben besondere Bedeutung. Durch die Zugabe von Kohlenstoff (C) im genannten Bereich zum Eisen wird die Härte, Festigkeit und Abriebfestigkeit verbessert. Bei einem zu geringen Anteil von Kohlenstoff ist die Festigkeit des Materials gering, und der Kolbenring verformt sich beim Einsatz plastisch, was zu einer Verringerung der Tangentialkraft führt. Bei einem zu großen Anteil wird der Werkstoff zu hart, was die Weiterbearbeitung des Stahlkolbenrings erschwert, wenn nicht unmöglich macht. Silizium (Si) ist bereits im Rohmaterial des Stahls vorhanden. Durch weitere Zugabe werden die Antioxidationseigenschaften und die Hitzebeständigkeit des Werkstoffes zusätzlich verbessert. Mangan (Mn) wird als Frischungsmittel dem geschmolzenen Stahl beigefügt und verbessert auch die Härte und Festigkeit. Chrom (Cr) erhöht die Festigkeit und setzt die Dehnung nur geringfügig herab. Es verbessert die Warmfestigkeit und Durchhärtbarkeit. Chrom ist ein starker Karbid- und Nitridbildner, was zur Verbesserung der Abriebfestigkeit und Verschleißfestigkeit beträgt. Molybdän (Mo) erhöht die Zugfestigkeit und besonders die Warmfestigkeit. Molybdän ist ein starker Karbidbildner. Aluminium bildet mit Stickstoff Nitride sehr hoher Härte. Vanadium (V) verbessert die Warmfestigkeit und unterdrückt die Überhitzungsempfindlichkeit. Vanadium ist ein starker Karbidbildner und erhöht die Zugfestigkeit und die Streckgrenze. Titan (Ti) und Niob (Nb) sind starke Karbid- und Nitridbildner und werden vorwiegend zur Stabilisierung gegenüber interkristalliner Korrosion eingesetzt. Die Elemente Phosphor (P) und Schwefel (S) sind Verunreinigungen in der Legierung, deren Anteil so gering wie möglich sein sollten. Da eine Verringerung deren Anteile kostenintensiv ist, werden im Allgemeinen geringfügige Anteile zugelassen, die keine veränderten Eigenschaften der Legierung bewirken.

Das erfindungsgemäße Verfahren zur Herstellung des Stahlkolbenrings aus dem erfindungsgemäßen Werkstoff umfasst folgende Schritte:
(a) Bereitstellen eines gewickelten und weichgeglühten Drahtes als Ausgangswerkstoff,
(b) Formen des Stahlkolbenrings unter Abtrennung vom gewickelten Draht,
(c) Glühen des Stahlkolbenrings auf einem Dorn und gleichzeitiges Nitrieren des Stahlkolbenrings in einem stickstoffabgebenden Medium,
(d) Fertigbearbeiten des Stahlkolbenrings.

Der Werkstoff wird mit einem weichgeglühten Gefüge im Schritt (a) bereitgestellt. Da der verwendete Draht im kaltgezogenen Zustand angeliefert wird, ist das sonst weiche Material gut wickelfähig. Im Schritt (b) wird der Draht rundgewickelt und der Stahlkolbenring in seine Rundform gebracht. Der Schritt (c) beinhaltet zwei Prozesse, die gleichzeitig durchgeführt werden. Zum einen wird der Stahlkolbenring auf einem Dorn geglüht, um durch dieses Formglühen eine Tangentialkraft im Einbauzustand zu erzeugen. Zum anderen wird durch die Nitrierung der Verschleißwiderstand des Werkstoffes erhöht. Die Nitrierung findet in einer stickstoffabgebenden Umgebung statt. Darunter wird ein Medium verstanden, das geeignet ist, den für die Nitrierung oder Aufstickung der Oberflächenrandschicht des Stahlkolbenrings erforderlichen Stickstoff freizusetzen. Der freigesetzte Stickstoff diffundiert dann in die Oberflächenrandschicht unter Bildung der entsprechenden Nitridverbindungen. Die gleichzeitige Durchführung des Formglühens und der Nitrierung spart Zeit. Auch ist die Nitriergeschwindigkeit des erfindungsgemäßen Werkstoffes größer als bei üblicherweise verwendeten Materialien zur Herstellung von Stahlkolbenringen, so dass bei gleicher Nitrierzeit eine größere Stickstoffzugabe oder eine geringere Nitrierzeit bei gleicher Stickstoffzugabe möglich ist. Bei der Durchführung dieses Vefahrenschrittes bei gleichen Parametern werden etwa doppelte Nitrierschichtdicken erreicht. Im Schritt (d) kann der Stahlkolbenring in einer abschließenden Fertigstellung bearbeitet und nachbehandelt werden.

Es ist bevorzugt, der Legierung zusätzlich bis 0,30 Gew.-% Titan beizufügen.

Es ist weiterhin bevorzugt, der Legierung bis 0,35 Gew.-% Niob beizufügen.

Es ist bevorzugter, dass die weiteren Anteile zum Eisen in der Legierung in folgenden Bereichen liegen: 0,3 bis 0,5 Gew.-% Kohlenstoff, bis 1,0 Gew.-% Silizium, bis 1,5 Gew.-% Mangan, bis 0,027 Gew.-% Phosphor, bis 0,027 Gew.-% Schwefel, 2,0 bis 6,0 Gew.-% Chrom, bis 1,25 Gew.-% Molybdän, bis 1,0 Gew.-% Aluminium und bis 0,25 Gew.-% Vanadium.

Noch bevorzugter ist es, dass die weiteren Anteile zum Eisen in der Legierung in folgenden Bereichen liegen: 0,35 bis 0,4 Gew.-% Kohlenstoff, bis 0,5 Gew.-% Silizium, bis 1,0 Gew.-% Mangan, bis 0,023 Gew.-% Phosphor, bis 0,023 Gew.-% Schwefel, 3,0 bis 4,0 Gew.-% Chrom, bis 1,0 Gew.-% Molybdän, bis 0,5 Gew.-% Aluminium und bis 0,20 Gew.-% Vanadium.

Jedoch am bevorzugtesten ist es, dass die weiteren Anteile zum Eisen in der Legierung in etwa folgende Werte betragen: 0,37 Gew.-% Kohlenstoff, 0,26 Gew.-% Silizium, 0,57 Gew.-% Mangan, 0,020 Gew.-% Phosphor, 0,018 Gew.-% Schwefel, 3,12 Gew.-% Chrom, 0,92 Gew.-% Molybdän, 0,013 Gew.-% Aluminium und 0,16 Gew.-% Vanadium.

Bevorzugt erfolgt in dieser Erfindung die Nitrierung in einer Gasatmosphäre oder im Plasma.

In einer bevorzugten Ausführungsform des erfindungsgemäßen Verfahrens wird der Stahlkolbenring im Verfahrensschritt (c) auf eine Temperatur von etwa 350°C bis 650°C erwärmt. Die Tiefe bzw. die Dicke der Nitrierschicht wird wesentlich durch die bei der Nitrierung angelegte Temperatur beeinflusst. Dabei nimmt die Dicke der Nitrierschicht bei einer bei höherer Temperatur durchgeführten Nitrierung zu.

Bevorzugt in dieser Erfindung ist für das Formglühen und Nitrieren des Verfahrensschrittes (c) ein Zeitraum von 2 bis zu 10 Stunden.

Weitere Vorteile, Merkmale und Anwendungsmöglichkeiten der vorliegenden Erfindung ergeben sich aus der nachfolgenden ausführlichen Beschreibung eines Ausführungsbeispiels.

Der Stahlkolbenring, der aus dem erfindungsgemäßen Werkstoff nach dem erfindungsgemäßen Verfahren hergestellt wird, kann passgenau hergestellt werden und weist eine gehärtete Oberflächenrandschicht auf. Die Nitriertiefe dieses Stahlkolbenrings ist dabei gleichmäßig. Der erfindungsgemäße Stahlkolbenring zeichnet sich durch einen preisgünstigen Werkstoff und durch ein preisgünstiges und einfaches Herstellungsverfahren aus. Insgesamt ist mit der Bereitstellung eines erfindungsgemäßen Stahlkolbenrings ein großer wirtschaftlicher Vorteil verbunden.

Zur Herstellung eines Stahlkolbenrings nach dem erfindungsgemäßen Verfahren, der eine gehärtete Oberfläche aufweist, wird ein Draht unter Abtrennung gewickelt und in die Form des herzustellenden Kolbenrings gebracht.

Der Draht, aus dem der Stahlkolbenring gewickelt und geformt wird, weist die in der Tabelle 1 wiedergegebene Zusammensetzung in Gewichtsprozenten auf (Der Restgehalt setzt sich aus Eisen und ggf. Verunreinigungen zusammen).

**Tabelle 1**

| %C | %Si | %Mn | %P | %S | %Cr | %Mo | %Al | %V |
|---|---|---|---|---|---|---|---|---|
| 0,37 | 0,26 | 0,57 | 0,020 | 0,018 | 3,12 | 0,92 | 0,013 | 0,16 |

Der bereitgestellte Draht der in Tabelle 1 angegebenen Zusammensetzung ist weichgeglüht und weist eine Zugfestigkeit von mindestens 900 N/mm² auf. Es wird im folgenden ein Stahlkolbenring mit einer axialen Höhe kleiner als 1,5 mm hergestellt.
Aufgrund der Kaltverformung im Bereitstellungszustand ergibt sich eine gute Wickelfähigkeit des ansonsten weichen Werkstoffs. Der Draht wird unter Abtrennung rundgewickelt und in die Form des Kolbenrings gebracht. Anschließend wird der Kolbenring auf einem Dorn erwärmt und einer Nitrierumgebung ausgesetzt. Der spezielle Gefügezustand, die chemische Zusammensetzung und die zuvor stattgefundene Kaltverformung sind die Voraussetzung für die einstufige Wärmebehandlung, die sowohl das Formglühen zur Erzeugung einer Tangentialkraft im Einbauzustand und die Nitrierbehandlung zur Erhöhung des Verschleißwiderstandes des Werkstoffs umfasst. Der Kolbenring wird dabei für 7 Stunden auf eine Temperatur von 560°C aufgeheizt. Nitriert wird mit Ammoniak und einem Spaltgas, wobei die Gasatmosphäre etwa 35% Restammoniak enthält. Nach dem Abkühlen des Stahlkolbenrings wird dieser abschließend weiterverarbeitet und in den endgültigen Formzustand gebracht. Er steht nun zur Verwendung und zum Einbau in einem Verbrennungsmotor zur Verfügung.

Der Stahlkolbenring, der nach dem oben beschriebenen Verfahren hergestellt wurde, weist eine Oberflächenhärte auf, die größer als 700 Hv 0,1 im Fertigzustand ist.

## Patentansprüche

1. Werkstoff für Stahlkolbenringe von Verbrennungsmotoren, der folgende Elemente in Gew.-% aufweist: bis 2,0% Mn; 1,0 bis 8,0% Cr, wobei der Rest Eisen ist,
**dadurch gekennzeichnet, dass** er folgende weitere Elemente in Gew.-% aufweist: 0,25 bis 0,65% C; bis 2,0% Si; bis 0,030% P; bis 0,030% S; bis 1,5% Mo; bis 1,5% Al; bis 0,35% V.

2. Werkstoff nach Anspruch 1, wobei zusätzlich ein Anteil von bis zu 0,30 Gew.-% Ti beinhaltet ist.

3. Werkstoff nach Anspruch 1 oder 2, wobei zusätzlich ein Anteil von bis zu 0,35 Gew.-% Nb beinhaltet ist.

4. Werkstoff nach einem oder mehreren der Ansprüche 1 bis 3, der folgende Anteile in Gew.-% aufweist: bis 1,5% Mn; 2,0 bis 6,0% Cr, 0,3 bis 0, 5% C; bis 1,0% Si; bis 0,027% P; bis 0,027% S; bis 1,25% Mo; bis 1,0% Al; bis 0,25% V, wobei der Rest Eisen ist.

5. Werkstoff nach Anspruch 4, der folgende Anteile in Gew.-% aufweist: bis 1,0% Mn; 3,0 bis 4,0% Cr, 0,35 bis 0,4% C; bis 0,5% Si; bis 0,023% P; bis 0,023% S; bis 1,0% Mo; bis 0,5% Al; bis 0,20% V, wobei der Rest Eisen ist.

6. Werkstoff nach Anspruch 5, wobei folgende Anteile in Gew.-% vorgesehen sind: etwa 0,37% C; etwa 0,26% Si; etwa 0,57% Mn; etwa 0,020% P; etwa 0,018% S; etwa 3,12% Cr; etwa 0,92% Mo; etwa 0,013% Al; etwa 0,16% V, wobei der Rest Eisen ist.

7. Verfahren zur Herstellung eines Stahlkolbenrings, wobei das Verfahren die Schritte umfasst:
(a) Bereitstellen eines gewickelten und weichgeglühten Drahtes als Ausgangswerkstoff,
(b) Formen des Stahlkolbenrings unter Abtrennung vom gewickelten Draht,
(c) Glühen des Stahlkolbenrings auf einem Dorn und gleichzeitiges Nitrieren des Stahlkolbenrings in einem stickstoffabgebenden Medium,
(d) Fertigbearbeiten des Stahlkolbenrings.

8. Verfahren nach Anspruch 7, wobei die Nitrierung in einer Gasatmosphäre oder in einem Plasma erfolgt.

9. Verfahren nach einem der Ansprüche 7 oder 8, wobei der Stahlkolbenring bei dem Schritt (c) auf eine Temperatur von etwa 350°C bis etwa 650°C erwärmt wird.

10. Verfahren nach Anspruch 9, wobei der Stahlkolbenring bei dem Schritt (c) auf eine Temperatur von etwa 450°C bis etwa 600°C erwärmt wird.

11. Verfahren nach Anspruch 10, wobei der Stahlkolbenring bei dem Schritt (c) auf eine Temperatur von etwa 560°C erwärmt wird.

12. Verfahren nach einem der Ansprüche 7 bis 11, wobei das Glühen und Nitrieren des Stahlkolbenrings bei dem Schritt (c) für einen Zeitraum von 2 bis zu 10 Stunden erfolgt.

13. Verfahren nach Anspruch 12, wobei das Glühen und Nitrieren des Stahlkolbenrings bei dem Schritt (c) für einen Zeitraum von 4 bis zu 8 Stunden erfolgt.

14. Verfahren nach Anspruch 13, wobei das Glühen und Nitrieren des Stahlkolbenrings bei dem Schritt (c) für einen Zeitraum von etwa 7 Stunden erfolgt.

15. Stahlkolbenring aus einem Werkstoff nach einem der Ansprüche 1 bis 6, der gemäß dem Verfahren nach einem der Ansprüche 7 bis 14 hergestellt ist, wobei die oberflächenbehandelte Schicht mindestens eine Härte von 700 HV 0,1 aufweist.
